# EUROPÄISCHE PATENTANMELDUNG

(11) **EP 1 341 295 A1**
(43) Veröffentlichungstag der Anmeldung: **03.09.2003**
(21) Anmeldenummer: 02004535.7
(22) Anmeldetag: 27.02.2002
(51) Int. Cl.: H02P 7/54, F04D 27/02, H02P 13/06

(54) **Stromversorgungsschaltung für einen Drehstrommotor**

(71) Anmelder: Jakob, Karl, Dipl.-Ing.(FH), D-85598 Baldham (DE)
(72) Erfinder: Jakob, Karl, Dipl.-Ing.(FH), D-85598 Baldham (DE)
(74) Vertreter: Körner, Ekkehard, Dipl.-Ing.

(57) **Zusammenfassung**

Es wird eine Stromversorgungsschaltung für einen wahlweise in Dreieckschaltung und Sternschaltung betreibbaren Drehstrommotor angegeben, enthaltend eine Drehstrom-Spartransformator, auf dem für jede Phase eine Hauptwicklung und eine Hilfswicklung angeordnet sind. Mittels einer Schaltereinrichtung läßt sich der Motor in Dreieckschaltung und Sternschaltung wahlweise direkt am Netz, in Dreieckschaltung an den Hauptwicklungen und Sternschaltung an den Hilfswicklungen betreiben, wobei die Hilfswicklungen auf die entsprechend der Sternschaltung herabgesetzte Leistung dimensioniert ist. Wenn der Transformator mit dem Stromversorgungsnetz verbunden ist, wird der Motor in Dreieck oder Sternschaltung mit am Transformator abgegriffenen Teilspannungen betrieben.

## Beschreibung

Die Erfindung bezieht sich auf eine Stromversorgungsschaltung für einen wahlweise in Dreieckschaltung und Sternschaltung betreibbaren Drehstrommotor.

Der Betrieb eines Drehstrommotors erfordert häufig die Herabsetzung der Drehzahl, um die Leistungsabgabe des Motors an den jeweiligen Bedarf anzupassen. Typische Beispiele sind Ventilatoren in Klimageräten, insbesondere bei Kühlhäusern, die in Zeiten schwacher Begehung, wie während Nacht- und Wochenendzeiten, eine geringere Leistung der Rückkühler benötigen. Eine Lösung, die zugleich aber auch die aufwendigste ist, besteht darin, die Frequenz der Versorgungsspannung, die zum Betrieb des Drehstrommotors verwendet wird, zu verändern. Bekannt sind auch Phasenanschnitt-Steuerschaltungen, die die dem Drehstrommotor zugeführte Effektivspannung herabsetzen. Phasenanschnittsteuerungen haben den Nachteil, daß sie die Versorgungsspannung des Drehstrommotors stark oberwellenhaltig machen, was Störungen in der Umgebung verursacht. Außerdem rufen sie eine erhebliche Geräuschentwicklung an den Drehstrommotoren durch starkes Brummen hervor. Als weitere Möglichkeit kommt der Einsatz von Transformatoren mit einer entsprechenden Vielzahl von Anzapfungen an den Wicklungen in Betracht, an denen unterschiedlich große Spannungen zur Versorgung des Drehstrommotors abgegriffen werden können. Der Nachteil solcher Transformatoren ist, daß ihr Einsatz mit relativ hohen Verlusten verbunden ist. Eine weitere, insbesondere beim Anfahren eines Drehstrommotors verwendete Maßnahme ist die Umschaltung der Motorwicklungen zwischen Sternschaltung und Dreieckschaltung, mit der aber nur zwei unterschiedliche Drehzahlen erreichbar sind.

Aus der EP 0 865 147 B1 ist eine Lösung bekannt, gemäß der die Wicklungen des Drehstrommotors jeweils bifilar ausgeführt sind, wobei jede Teilwicklung für die volle Spannung Phase gegen Phase ausgelegt ist. Dem Drehstrommotor ist eine Schaltereinrichtung zugeordnet, mit deren Hilfe die Teilwicklungen wahlweise parallel in Dreieckschaltung, in Serie in Dreieckschaltung, parallel in Sternschaltung, in Serie in Sternschaltung sowie drei Teilwicklungen in Dreieck mit den übrigen Teilwicklungen in Stern geschaltet werden können, wodurch ohne weitere Hilfsmittel fünf verschiedene Drehzahlen erreichbar sind, bei denen jeweils alle Teilwicklungen stromdurchflossen sind. Der Motor ist stets mit sinusförmigen Spannungen betrieben und neigt daher nicht zum Brummen. Nachteilig ist, daß der Motor von vornherein für diese Verwendungsart dimensioniert werden muß und nur ganz bestimmte Drehzahlen erreichbar sind, weil zur Vermeidung von Ausgleichsströmen die auf jedem Pol befindlichen Teilwicklungen jeweils gleich ausgeführt werden müssen.

Die Erfindung möchte hingegen vorhandene Drehstrommotoren für Lastfälle mit über der Drehzahl quadratisch verlaufendem Drehmoment einsetzbar machen, ohne daß an den Motoren etwas geändert werden muß. Ihr liegt die Aufgabe zugrunde, eine Stromversorgungsschaltung anzugeben, mit deren Hilfe mehrere Drehzahlen bei einem Drehstrommotor erreichbar sind, ohne daß große Zusatzverluste hingenommen werden müssen.

Diese Aufgabe wird durch die in Anspruch 1 angegebenen Merkmale gelöst. Vorteilhafte Ausgestaltungen der Erfindung sind Gegenstand der Unteransprüche.

Die Stromversorgungsschaltung der vorliegenden Erfindung besteht aus zwei Drehstrom-Spartransformatoren unterschiedlicher Leistung, die auf einem gemeinsamen Kern vereinigt sind und deren Wicklungen jeweils wenigstens eine Anzapfung haben, und einer Schaltereinrichtung, die die Drehstromtransformatoren wahlweise wirksam macht.

Der Vorteil der Erfindung besteht darin, daß beliebige Drehzahlen, die der Motor erreichen soll, eingerichtet werden können, an dem Motor keinerlei Modifikationen vorgenommen werden müssen, die an den Transformatoren auftretenden Verluste kleingehalten sind, der Drehstrommotor stets mit sinusförmigen Spannungen betrieben ist und der Motor daher keine Brummgeräusche abgibt.

Die Erfindung wird nachfolgend unter Bezugnahme auf ein in den Zeichnungen dargestelltes Ausführungsbeispiel näher erläutert.

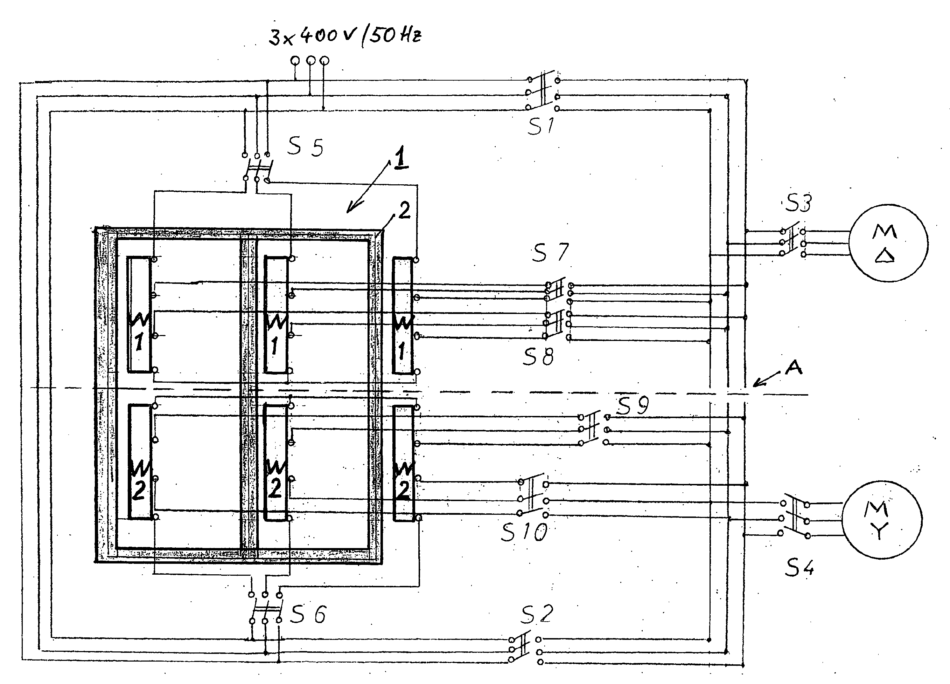

Die Zeichnung zeigt das Schemaschaltbild der erfindungsgemäßen Stromversorgungsschaltung und eines Drehstrommotors. Man erkennt in ihr einen insgesamt mit 1 bezeichneten Transformator mit einem dreischenkligen Kern 2 und drei Hauptwicklungen W1 sowie drei Hilfswicklungen W2. Der Drehstrommotor ist rechts mit MΔ für die Dreiecksschaltungskonfiguration und mit MY für die Sternschaltungskonfiguration dargestellt.

Zu der Anordnung gehört eine Schaltereinrichtung bestehend aus Schaltern S1 bis S10, die jeweils dreipolig ausgeführt sind. Mit Hilfe der Schalter S5 und S6 können die Transformatorwicklungen W1 und W2 mit dem dreiphasigen Stromnetz verbunden werden. Mit Hilfe der Schalter S3 und S4 kann der Motor wahlweise in Dreieckschaltung oder in Sternschaltung gespeist werden.

Die Schalter S1 und S2 dienen dazu, den Motor je nach Stellung der Schalter S3 und S4 wahlweise in Dreieckschaltung oder in Sternschaltung direkt mit dem Stromversorgungsnetz zu verbinden, wobei dann die Schalter S5 und S6 und einer der Schalter S3 und S4 geöffnet sind.

Wie aus der Zeichnung ersichtlich, sind die einzelnen Phasenwicklungen W1 und W2 auf dem Transformatorkern 2 mit jeweils zwei Anzapfungen versehen. Mit Hilfe der Schalter S7 und S8 können wahlweise jeweils eine der Anzapfungen höherer oder niedrigerer Abgabespannung mit dem Motor in Dreiecksschaltungskonfiguration desselben verbunden werden, wenn der Schalter S3 eingeschaltet ist. Der Schalter S5 ist dann geschlossen, während alle übrigen Schalter geöffnet sind.

Mit Hilfe der Schalter S9 und S10 kann der Motor wahlweise mit einer der Ausgangsspannungen unterschiedlicher Höhe, die von den Hilfswicklungen W2 abgegeben werden, in Sternschaltungskonfiguration des Motors verbunden werden, wenn der Schalter S4 geschlossen ist. Der Schalter S6 ist ebenfalls geschlossen, während alle anderen Schalter geöffnet sind.

Man erkennt, daß einer der Schalter S1 und S2 entfallen kann, wenn die Leitungsbündel, an denen die Schalter S3 und S4 angeschlossen sind, bei A miteinander verbunden sind.

Man erkennt aus der Zeichnung, daß im Vollastbetrieb in Dreieckschaltung der Transformator 1 vollständig vom Stromnetz getrennt sein kann. In diesem Betriebsfall sind auch die Schalter S7 und S10 geöffnet, um eine Erregung des Transformators zu verhindern. Die Zusatzverluste, die von der Stromversorgungsschaltung hervorgerufen werden, sind dann 0. Ferner erkennt man, daß bei Betrieb des Motors in Dreieckschaltung durch Schließen der Schalter S3, S5 und S7 und Öffnen des Schalters S1 der Motor nur in Teillast läuft und daher die Transformatorhauptwicklungen nur für die entsprechende Teillast dimensioniert zu sein brauchen.

Bei Betrieb in Sternschaltung ist die Leistungsaufnahme des Drehstrommotors durch die Herabsetzung der Strangspannungen auf ein Drittel seiner Nennleistung vermindert. Die Hilfswicklungen W2 brauchen daher a priori nur auf ein Drittel der Nennleistung dimensioniert zu werden, im vorliegenden Falle aber noch geringer, weil die Leistungsaufnahme des Motors entsprechend der Teilspannung, die über den Schalter S9 abgenommen wird, weiter herabgesetzt ist. Die Dimensionierung der Hilfwicklungen unter Berücksichtigung der Tatsache, daß sie nur bei Teillastbetrieb wirksam sind, ist verschieden von der der Hauptwicklungen und führt zu einer Verminderung der Transformatorverluste im Teillastbetrieb gegenüber dem Zustand, bei dem der Motor in Sternschaltung mit einer der Anzapfungen der Hauptwicklungen verbunden wäre.

Die nachfolgende Tabelle 1 gibt das Schaltschema für die Schalter S1 bis S10 an, wenn mit dem Motor sechs verschiedene Drehzahlen erreicht werden sollen. Eine 1 steht dabei für einen Einschaltzustand, eine 0 für einen Ausschaltzustand der Schalter.

**Tabelle 1**

| Schalterstellungen bei verschiedenen Drehzahlen | | | | | | |
|---|---|---|---|---|---|---|
| **Schalter** | **Drehzahlen (Stufe)** | | | | | |
| | **6** | **5** | **4** | **3** | **2** | **1** |
| S1 | 1 | 0 | 0 | 0 | 0 | 0 |
| S2 | 0 | 0 | 0 | 1 | 0 | 0 |
| S3 | 1 | 1 | 1 | 0 | 0 | 0 |
| S4 | 0 | 0 | 0 | 1 | 1 | 1 |
| S5 | 0 | 1 | 1 | 0 | 0 | 0 |
| S6 | 0 | 0 | 0 | 0 | 1 | 1 |
| S7 | 0 | 1 | 0 | 0 | 0 | 0 |
| S8 | 0 | 0 | 1 | 0 | 0 | 0 |
| S9 | 0 | 0 | 0 | 0 | 0 | 1 |
| S10 | 0 | 0 | 0 | 0 | 1 | 0 |

Nachfolgend wird eine Tabelle für das Beispiel eines Ventilatormotors angegeben, dessen Drehmoment mit fallender Betriebsspannung quadratisch abnimmt.

**Tabelle 2**

| | Drehzahl U/min | Betr.-Spg. V | Leistung (W) | Strom A | cos ϕ | Zusatzverluste |
|---|---|---|---|---|---|---|
| Dreieck | 900 | 3x400 | 180 | 0,40 | 0,67 | 0 |
| am Netz | | | | | | |
| Anzapf 1 | 850 | 3x345 | 160 | 0,33 | 0,70 | ca 10% |
| Anzapf 2 | 800 | 3x285 | 140 | 0,29 | 0,70 | ca 10% |
| Stern | 750 | 3x400 | 120 | 0,20 | 0,87 | 0 |
| am Netz | | | | | | |
| Anzapf 1 | 600 | 3x345 | 88 | 0,17 | 0,88 | ca 8% |
| Anzapf 2 | 400 | 3x250 | 49 | 0,13 | 0,88 | ca 7% |

Die Tabelle zeigt deutlich die geringen Verluste, die sich im Bereich von 10% und darunter bewegen, wenn der Transformator in die Stromversorgung einbezogen ist. Im Vergleich dazu liegen die Verluste bei Phasenanschnitt-Steuerung oder Frequenzumformung bei 30% bis 40%.

Im dargestellten Beispiel weisen die Transformatorwicklungen jeweils zwei Anzapfungen auf. Es ist aber auch möglich, jeweils nur eine Anzapfung oder auch mehr als zwei Anzapfungen vorzusehen, je nachdem, wie viele unterschiedliche Drehzahlen man erreichen möchte. Wesentlich ist, daß für den Betrieb des Motors in Sternschaltung ein eigener Spartransformator vorgesehen ist, auch wenn dieser gemäß vorteilhafter Weiterbildung der Erfindung auf demselben Kern angeordnet ist, wie der Spartransformator für den Betrieb des Motors in Dreieckschaltung. Der Einsatz eines gesonderten Spartransformators für den Betrieb des Motors in Sternschaltung ermöglicht es, diesen im Hinblick auf die auf ein Drittel herabgesetzte Leistungsaufnahme des Motors in Sternschaltung zu dimensionieren, was wirtschaftlicher ist, als wenn man den Motor in Sternschaltung an der Hauptwicklung betreiben würde, was sich an sich grundsätzlich anbietet. Die Transformatorverluste wären jedoch in jenem Falle höher, was durch die vorliegende Erfindung vermieden werden soll.

## Patentansprüche

1. Stromversorgungsschaltung für einen wahlweise in Dreieckschaltung und Sternschaltung betreibbaren Drehstrommotor (M) enthaltend einen Drehstrom-Spartransformator (1), der für jede Phase je eine Hauptwicklung (W1) hat, die mit wenigstens einer Anzapfung zur Abnahme einer Teilspannung versehen ist und die für die durch die Teilspannung und die Motornennleistung in Dreieckschaltung bestimmte Motorteillast ausgelegt ist, und einen Spartransformator, der für jede Phase eine Hilfswicklung (W2) hat, die mit wenigstens einer Anzapfung zur Abnahme einer Teilspannung versehen ist und der für die durch die Teilspannung und die Motorleistung in Sternschaltung bestimmte Motorteillast ausgelegt ist, und eine Schaltereinrichtung (S1 bis S10) zum wahlweisen Anschalten der Motorwicklungen in Dreieckschaltung und Sternschaltung direkt an das Stromversorgungsnetz, in Dreiecksschaltung an die wenigstens eine Anzapfung der Hauptwicklungen (W1) oder in Sternschaltung an die wenigstens eine Anzapfung der Hilfwicklungen (W2).

2. Stromversorgungsschaltung nach Anspruch 1, bei der die Schaltereinrichtung (S1 - S10) dazu eingerichtet ist, die Wicklungen (W1, W2) der Drehstrom-Spartransformatoren (1) wahlweise mit dem Stromversorgungsnetz zu verbinden und davon zu lösen.

3. Stromversorgungsschaltung nach Anspruch 1 oder 2, bei der die Hauptwicklungen (W1) und die Hilfswicklungen (W2) auf demselben Transformatorkern (2) angebracht sind.

4. Stromversorgungsschaltung nach einem der vorhergehenden Ansprüche, bei der die Transformatorwicklungen (W1, W2) jeweils zwei Anzapfungen aufweisen.

5. Stromversorgungsschaltung nach einem der Ansprüche 1 bis 4, bei der die Windungsverhältnisse der durch die Anzapfungen begrenzten Teilwicklungen der Hauptwicklungen (W1) derart gewählt sind, daß der Bereich, der zwischen den Drehzahlen liegt, die der Motor in Dreieckschaltung und in Sternschaltung bei Betrieb direkt am Stromversorgungsnetz erreicht, etwa gleichmäßig unterteilt wird.

6. Stromversorgungsschaltung nach einem der vorhergehenden Ansprüche, bei der die Windungsverhältnisse der durch die Anzapfungen begrenzten Teilwicklungen der Hilfswicklungen (W2) derart gewählt sind, daß der Bereich der zwischen 0 und der Drehzahl liegt, die der Motor in Sternschaltung bei Betrieb direkt am Stromversorgungsnetz erreicht, etwa gleichmäßig unterteilt wird.
